# EUROPEAN PATENT APPLICATION

(11) **EP 1 512 553 A1**
(43) Date of publication of application: **09.03.2005**
(21) Application number: 04103959.5
(22) Date of filing: 18.08.2004
(51) Int. Cl.: B60C 1/00, C08L 9/00

(54) **Pneumatic tire having a component containing high trans isoprene-butadiene rubber**

(30) Priority: 25.08.2003 US 497691 P
(71) Applicant: THE GOODYEAR TIRE & RUBBER COMPANY, Akron, Ohio 44316-0001 (US)
(72) Inventor: Bates, Kenneth Allen, 44212, Brunswick (US); Verthe, John Joseph Andre, 44240, Kent (US)
(74) Representative: Kutsch, Bernd

(57) **Abstract**

The invention is directed to a pneumatic tire having at least one component comprising a vulcanizable rubber composition, wherein the vulcanizable rubber composition comprises, based on 100 parts by weight of elastomer (phr), from 30 to 100 phr of high trans random IBR, and from zero to 70 phr of at least one additional elastomer, wherein the high trans random IBR comprises from 3 to 12 percent by weight of isoprene.

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads. For instance, various mixtures of styrene-butadiene rubber and polybutadiene rubber are commonly used as a rubbery material for automobile tire treads.

US-A- 6,103,842 and 6,627,715 disclose processes and catalyst systems for the copolymerization of 1,3-butadiene monomer and isoprene monomer into a isoprene-butadiene copolymer having a high trans-1,4-polybutadiene content and having a random distribution of repeat units which are derived from isoprene.

### Summary of the Invention

The current invention is directed to a pneumatic tire having at least one component comprising a high trans solution isoprene-butadiene rubber (HTIBR) with a random distribution of repeat units which are derived from isoprene. The invention is based on the highly surprising and unexpected discovery that a desirable balance of properties may be realized by using a HISBR with a low isoprene content.

It is then an object of the present invention to provide a pneumatic tire having at least one component comprising a vulcanizable rubber composition, wherein the vulcanizable rubber composition comprises, based on 100 parts by weight of elastomer (phr), from 30 to 100 phr of high trans random IBR, and from zero to 70 phr, preferably from 10 to 50 phr, of at least one additional elastomer, wherein the high trans random IBR comprises from 3 to 30 percent, preferably from 3 to 10 percent, by weight of isoprene.

In one aspect of the invention, the rubber composition comprises from 50 to 100 phr of high trans random IBR derived from 3 to 12 percent by weight of isoprene, and from 10 to 50 phr of at least one additional elastomer.

### Description of the Invention

The pneumatic tire of the present invention has at least one component comprising a high trans solution isoprene-butadiene rubber HTIBR. By HTIBR, it is meant an IBR produced by a solution method and having a percentage of trans-1,4-butadiene conformation in the polybutadiene segments of the polymer of greater than 60 percent by weight. Alternatively, suitable HTIBR may have a percentage of trans-1,4-butadiene conformation in the polybutadiene segments of the polymer of greater than 70 percent by weight. Suitable HTIBR may contain from 3 to 12 percent by weight of isoprene. Alternatively, suitable HTIBR may contain from 3 to 10 percent by weight of isoprene.

Suitable HTIBR may be made by any of the suitable solution polymerization methods as are known in the art. In one embodiment, suitable HTIBR may be made using the methods of US-A- 6,103,842. In another embodiment, suitable HTIBR may be made using the methods of US 6,627,715. Isoprene-butadiene rubbers so made may contain from 2 weight percent to 50 weight percent isoprene, and from 50 weight percent to 98 weight percent 1,3-butadiene. However, in some cases, the amount of isoprene included will be as low as about 1 weight percent. In one embodiment of the present invention, suitable isoprene-butadiene rubber so made will contain from 3 weight percent to 12 weight percent isoprene and from 88 weight percent to 97 weight percent 1,3-butadiene. In another embodiment, suitable isoprene-butadiene rubber will contain from 3 weight percent to 10 weight percent isoprene and from 90 weight percent to 97 weight percent 1,3-butadiene. These isoprene-butadiene rubbers typically have a melting point which is within the range of 0°C to 40°C. Higher isoprene content HTIBR may exhibit no melting point.

The isoprene-butadiene rubber will typically have a glass transition temperature in a range of from -80°C to -90°C, measured as the DSC midpoint.

The isoprene-butadiene rubber will typically have a number average molecular weight Mn in a range of from 1.2 x 10⁶ to 1.6 x 10⁶, and a weight average molecular weight Mw in a range of from 2.5 x 10⁶ to 3.0 x 10⁶. The isoprene-butadiene rubber will typically have a polydispersity, Mw/Mn, in a range of from 1.8 to 2.2.

The isoprene-butadiene rubber will typically have a Mooney viscosity ML 1+4 (100°C) in a range of from 60 to 75.

In suitable isoprene-butadiene rubbers containing less than 12 weight percent bound isoprene, the distribution of repeat units derived from isoprene and butadiene is essentially random. The term "random", as used herein, means that in HTIBR derived from less than less than 10 weight percent bound isoprene, less than 1 percent of the total quantity of repeat units derived from isoprene are in blocks containing 5 or more isoprene repeat units. In other words, more than 99 percent of the repeat units derived from isoprene are in blocks containing 4 or less repeat units. In such isoprene-butadiene rubbers, at least 50 percent of repeat units derived from isoprene will be in blocks containing only one isoprene repeat unit and over 85 percent of the repeat units derived from isoprene will be in blocks containing less than 3 repeat units.

Suitable isoprene-butadiene copolymers also have a consistent composition throughout their polymer chains. In other words, the isoprene content of the polymer will be the same from the beginning to the end of the polymer chain. No segments of at least 100 repeat units within the polymer will have a isoprene content which differs from the total isoprene content of the polymer by more than 10 percent. Such isoprene-butadiene copolymers will typically contain no segments having a length of at least 100 repeat units which have a isoprene content which differs from the total isoprene content of the polymer by more than about 5 percent.

In the broadest embodiment, suitable HTIBR may be made by any of the suitable solution polymerization methods as are known in the art. In one embodiment, suitable HTIBR may be produced using a process as taught in US-A- 6,627,715, that comprises copolymerizing isoprene and 1,3-butadiene in an organic solvent in the presence of a catalyst system that is comprised of
(A) an organolithium compound,
(B) a group IIa metal salt selected from the group consisting of group IIa metal salts of amino glycols and group IIa metal salts of glycol ethers, and
(C) an organometallic compound selected from the group consisting of organoaluminum compounds and organomagnesium compounds.

In another embodiment, suitable HTIBR may be produced using a process as taught in US-A- 6,103,842, that comprises copolymerizing isoprene and 1,3-butadiene under isothermal conditions in an organic solvent in the presence of a catalyst system which consists essentially of
(A) an organolithium compound,
(B) a barium alkoxide, and
(C) a lithium alkoxide.

In one embodiment, the pneumatic tire of the present invention may include a component comprising between 30 and 100 parts by weight of HTIBR. The component may also include between zero and up to 70 parts by weight of other elastomers as are known in the art, to make up a total 100 parts by weight of elastomer. In another embodiment, the pneumatic tire of the present invention may include a component comprising between 50 and 100 parts by weight of HTIBR. The component may also include between zero and up to 50 parts by weight of other elastomers as are known in the art, to make up a total 100 parts by weight of elastomer.

Other elastomers that may be used along with the HTIBR may include various general purpose elastomers as are known in the art. The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include a carboxylated rubber, silicon-coupled and tin-coupled star-branched polymers. The preferred rubber or elastomers are polybutadiene, SBR, and natural rubber.

In one aspect the rubber to be combined with the HTIBR is preferably one or more diene-based rubbers. For example, one or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

The commonly-employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

Commonly-employed carbon blacks can be used as a conventional filler. Representative examples of such carbon blacks include N110, N121, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

It may be preferred to have the rubber composition for use in the tire component to additionally contain a conventional sulfur containing organosilicon compound. Examples of suitable sulfur containing organosilicon compounds are of the formula:

Z ― Alk ― Sₙ ― Alk ― Z I

in which Z is selected from the group consisting of 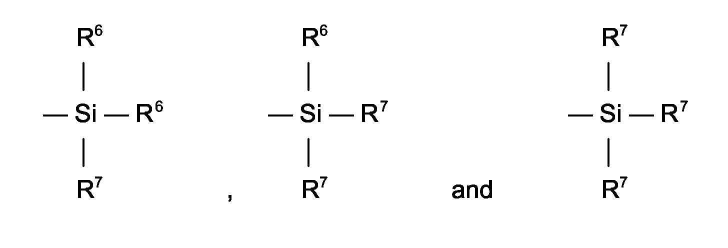 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

Specific examples of sulfur containing organosilicon compounds which may be used in accordance with the present invention include: 3,3'-bis(trimethoxysilylpropyl) disulfide, 3,3'-bis(triisooctoxysilylpropyl) tetrasulfide, 2,2'-bis(tri-2"-methylcyclohexoxysilylethyl) tetrasulfide, 3,3'-bis(phenyl dimethoxysilylpropyl) tetrasulfide, 4,4'-bis(trimethoxysilyl-buten-2-yl) tetrasulfide.

The preferred sulfur containing organosilicon compounds are 3,3'-bis(trimethoxy or triethoxy silylpropyl) sulfides. The most preferred compounds are 3,3'is(triethoxysilylpropyl) disulfide and 3,3'-bis(triethoxysilylpropyl) tetrasulfide. Therefore, as to formula I, preferably Z is 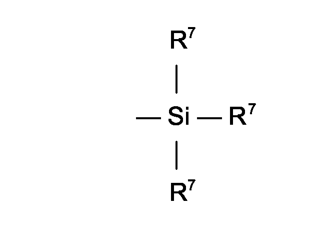 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

The amount of the sulfur containing organosilicon compound of formula I in a rubber composition will vary depending on the level of other additives that are used. Generally speaking, the amount of the compound of formula I will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents.

Details about these materials and the compounding technology used here are given in EP-A- 0 941 872, paragraphs 38-41.

The mixing of the rubber composition can be accomplished by methods known to those having skill in the rubber mixing art. For example the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. Preferably, the compound is a tread, a tread cap or a tread base.

Preferably, the tire is a radial passenger or truck tire.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air.

The following examples are presented for the purposes of illustrating, and not limiting the present invention. All parts are parts by weight unless specifically identified otherwise.

### EXAMPLE I

In this example, a series of high trans random solution IBR (HTIBR) polymers prepared following the teachings of US-A- 6,627,715 were compounded and tested for various physical properties. These polymers are characterized as indicated in Table 1.

The polymers were compounded with 70 phr of HTIBR and 30 phr of natural rubber (NR), and with standard amounts of conventional curatives and processing aids as indicated in Table 2, and cured with a standard cure cycle. Cured samples were evaluated for various physical properties following standard tests protocols as indicated in Table 3.

**Table 1**

| Characterization of high trans isoprene-butadiene polymers | | | | |
|---|---|---|---|---|
| Sample | 1 | 2 | 3 | 4 |
| trans 1,4-BR % | 80.5 | 78.8 | 76.8 | 72.8 |
| cis 1,4-BR % | 13.1 | 12.0 | 11.9 | 11.9 |
| 1,2-BR % | 3.3 | 3.1 | 2.9 | 2.9 |
| Isoprene | 3.1 | 6.1 | 8.4 | 12.4 |
| Total % | 100.0 | 100.0 | 100.0 | 100.0 |
| Tg (C) | -88 | -88 | -89 | -85 |
| Tm (C) | 35 | 22 | 15 | 5 |
| Mn x 10⁻⁵ | 1.42 | 1.35 | 1.40 | 1.45 |
| Mw x 10⁻⁵ | 2.72 | 2.72 | 2.95 | 2.94 |
| Mw/Mn | 1.9 | 2.0 | 2.1 | 2.0 |
| ML1+4(100°C) | 65 | 65 | 70 | 68 |

**Table 2**

| Standard Compound Recipe | |
|---|---|
| HTIBR | 70 |
| Natural Rubber | 30 |
| Carbon Black | 60 |
| Process Oil | 14 |
| ZnO | 3 |
| Stearic Acid | 2.5 |
| Waxes | 1.5 |
| Antidegradants¹ | 4 |
| Sulfur | 1.8 |
| Accelerator² | 0.9 |

| | |
|---|---|
| ¹p-phenylenediamine type | |
| ²sulfenamide type | |

**Table 3**

| Sample | 1 | 2 | 3 | 4 |
|---|---|---|---|---|
| Green Tack (N) | 0.8 | 3.5 | 9.3 | 6.2 |

| Tear (Peel) Strength | | | | |
|---|---|---|---|---|
| 23°C | 214 | 239 | 197 | 203 |
| 95°C | 148 | 161 | 142 | 137 |

| Stress-Strain | | | | |
|---|---|---|---|---|
| Modulus 300% (MPa) | 9.64 | 9.87 | 9.59 | 9.60 |
| Tensile (MPa) | 19.1 | 18 | 18.8 | 16.5 |
| Elongation (%) | 493 | 467 | 491 | 450 |

| Zwick Rebound | | | | |
|---|---|---|---|---|
| 23°C | 45 | 45 | 45 | 45 |
| 100°C | 55 | 55 | 55 | 56 |
| E at 0°C (MPa) | 96 | 74 | 51 | 50 |
| DIN abrasion loss | 42 | 46 | 44 | 43 |

The samples demonstrate an unexpected maximum in tear and green tack strength for the HTIBR samples having an isoprene content in a range of about 3 to 12 percent. This is particularly surprising since generally improvements in tear strength are realized only with a compromise in rebound and abrasion, and vice versa. Further, the tear values for the lower isoprene contents are surprisingly high.

## Claims

1. A pneumatic tire having a component comprising a vulcanizable rubber composition comprising, based on 100 parts by weight of elastomer (phr),
(A) from 30 to 100 phr of high trans random isoprene-butadiene rubber (IBR) derived from 3 to 12 percent by weight of isoprene; and
(B) from zero to 70 phr of at least one additional elastomer.

2. The pneumatic tire of claim 1, wherein said high trans random IBR has a polydispersity of from 1.8 to 2.2.

3. The pneumatic tire of claim 1 or 2, wherein said high trans random IBR has a trans content of greater than 60 percent, preferably greater than 70 percent by weight.

4. The pneumatic tire of at least one of the previous claims, wherein said high trans random IBR has a glass transition temperature in a range of from - 80°C to -90°C.

5. The pneumatic tire of at least one of the previous claims, wherein said component is a tread cap or tread base.

6. The pneumatic tire of at least one of the previous claims, wherein said at least one additional elastomer is selected from the group consisting of cis 1,4-polyisoprene rubber (natural or synthetic), 3,4-polyisoprene rubber, styrene/isoprene/butadiene rubber, styrene/isoprene rubber, emulsion and solution polymerization derived styrene/butadiene rubbers, cis 1,4-polybutadiene rubbers and emulsion polymerization prepared butadiene/acrylonitrile copolymers

7. The pneumatic tire of at least one of the previous claims, wherein said vulcanizable rubber composition further comprises from 20 to 100 phr of carbon black.

8. The pneumatic tire of at least one of the previous claims, wherein said vulcanizable rubber composition further comprises from 20 to 100 phr of silica.

9. The pneumatic tire of at least one of the previous claims, wherein less than 10 percent of the total quantity of repeat units derived from isoprene in said high trans random IBR are in blocks containing more than five isoprene repeat units.

10. The pneumatic tire of at least one of the previous claims, wherein said high trans random IBR is produced by a process that comprises copolymerizing isoprene and 1,3-butadiene in an organic solvent in the presence of a catalyst system that is comprised of
(A) an organolithium compound,
(B) a group IIa metal salt selected from the group consisting of group IIa metal salts of amino glycols and group IIa metal salts of glycol ethers, and
(C) an organometallic compound selected from the group consisting of organoaluminum compounds and organomagnesium compounds.
